(19) Europäisches Patentamt / European Patent Office / Office européen des brevets

(11) **EP 2 455 343 A1**

(12) **EUROPEAN PATENT APPLICATION**
published in accordance with Art. 153(4) EPC

(43) Date of publication:
**23.05.2012 Bulletin 2012/21**

(21) Application number: **09847303.6**

(22) Date of filing: **13.07.2009**

(51) Int Cl.:
*C02F 1/14* (2006.01)     *B01D 1/16* (2006.01)
*B01D 5/00* (2006.01)     *C02F 1/04* (2006.01)

(86) International application number:
**PCT/JP2009/062664**

(87) International publication number:
**WO 2011/007405 (20.01.2011 Gazette 2011/03)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(71) Applicant: **Electra Holdings Co., Ltd.**
**Chiyoda-ku**
**Tokyo 100-0006 (JP)**

(72) Inventor: **YABE Takashi**
**Tokyo 114-0013 (JP)**

(74) Representative: **Skone James, Robert Edmund**
**Gill Jennings & Every LLP**
**The Broadgate Tower**
**20 Primrose Street**
**GB-London EC2A 2ES (GB)**

(54) **WATER PURIFYING DEVICE**

(57)     Provided is a water purifying apparatus capable of efficiently producing purified water from raw water. The water purifying apparatus comprises: a casing (11) having a circulation path; a splitter device (15) disposed within the casing (11) and adapted to split raw water into droplets and create a carrier airflow (A1) capable of circulating along the circulation path and carrying water vapor evaporated from the droplets (D1); and a condenser (19) disposed within the casing (11) at a position downstream of the splitter device (15) in a direction of the carrier airflow and adapted to condense the water vapor to create purified water. The splitter device (15) comprises a rotary shaft (15a) extending in an up-down direction of the casing (11), and a blade (152A to 152Q) radially attached to the rotary shaft (15a) and having irregularities (152p, 152q, 152r, 152s, 152t).

FIG. 1

**Description**

TECHNICAL FIELD

The present invention relates to a water purifying apparatus for obtaining purified water from raw water.

BACKGROUND ART

Currently, 1.1 billion people in the world's population face a situation where they cannot sufficiently use water. It is predicted that, in 2025, 3 billion people will suffer from water shortage. In view of this issue, various apparatuses for obtaining freshwater from seawater are being studied. P articularly, in recent years, a reverse osmosis membrane apparatus designed to subject seawater to filtering to create freshwater, and an evaporation apparatus designed to distill seawater to create freshwater, have been put to practical use.

For example, a multi-stage evaporation apparatus has a plurality of depressurization chambers. Each of the chambers is depressurized to lower an evaporation temperature to induce evaporation of seawater. Condensation heat of water vapor evaporated in a high-temperature one of the chambers is heat-exchanged with seawater in a low-temperature one of the chambers to perform heat recovery.

LIST OF PRIOR ART DOCUMENTS

[PATENT DOCUMENTS]

Patent Document 1: JP 2006-070889A
Patent Document 2: JP 09-052082A

SUMMARY OF THE INVENTION

[PROBLEM TO BE SOLVED BY THE INVENTION]

However, the above evaporation apparatus is complicated in structure and large in size. Moreover, the evaporation apparatus requires a lot of energy, and is therefore installed beside a thermal power station, a refinery or a power-generating plant. As above, the evaporation apparatus has problems in terms of energy conservation and location requirements.

It is therefore an object of the present invention to provide a water purifying apparatus capable of efficiently producing purified water from raw water.

[MEANS FOR SOLVING THE PROBLEM]

Features of the present invention will be described while assigning a reference numeral or code to each element. It is to be understood that such a reference code is assigned for the sake of reference, but it is not intended to limit the present invention to a specific embodiment thereof.

According to a first aspect of the present invention, there is provided a water purifying apparatus (1) which comprises: a casing (11) having a circulation path (11c); a splitter device (15) disposed within the casing (11) and adapted to split raw water into droplets (D1) and create a carrier airflow (A1) capable of circulating along the circulation path (11c) and carrying water vapor evaporated from the droplets (D1); and a condenser (19) disposed within the casing (11) at a position downstream of the splitter device (15) in a direction of the carrier airflow and adapted to condense the water vapor to create purified water. The splitter device (15) comprises a rotary shaft (15a) extending in an up-down direction of the casing (11), and a blade (152A to 152Q) radially attached to the rotary shaft (15a) and having irregularities (152p, 152q, 152r, 152s, 152t).

In the water purifying apparatus according the first aspect of the present invention, the irregularities may comprise a concave portion (152p, 152q) depressed from a blade surface (152d) of the blade (152A to 152Q).

The concave portion (152p, 152q) may be formed to extend from an edge (152a, 152c) of the blade (152A to 152Q).

Alternatively, the irregularities may comprise a concave portion (152r, 152s) formed by partially cutting out an edge (152a, 152c) of the blade (152A to 152Q).

Alternatively, the irregularities may comprise a protrusion (152t) protruding from a blade surface (152d) of the blade.

Alternatively, the irregularities comprise first and second concave portions (154p, 154q) arranged in series in a direction toward a distal end of the blade (15f), and a convex portion (154r) arranged between the first and second concave portions.

The blade (152A to 152Q) may be disposed obliquely with respect to its rotational axis.

The blade (152A to 152Q) may be formed by cutting a disk-shaped member in a radial direction thereof to prepare a sector-shaped piece, and twisting the sector-shaped piece.

The water purifying apparatus according to the first aspect of the present invention may comprise a circulator (17) attached to the rotary shaft (15a) of the splitter device (15).

The casing (1) includes a first casing (11A) and a second casing (11B) which are stacked one over the other. In this case, the splitter device (15) includes a first splitter device (15c) disposed within the first casing (11A) and having a first blade, and a second splitter device (15d) disposed within the second casing (11B) and having a second blade. The first and second splitter devices (15c, 15d) are attached to a rotary shaft (15a). Further, the condenser (19) includes a first condenser (19A) disposed within the first casing, (11A) and a second condenser (19B) disposed within the second casing (11B).

Alternatively, the casing may include a first casing, and a second casing communicating with the first casing. In this case, the splitter device may include a first splitter device disposed within the first casing, and a second splitter device disposed within the second casing. The condenser may then include a first condenser disposed within the first casing, and a second condenser disposed within the second casing and communicating with the first condenser. The water purifying apparatus comprises a feedback pipe (26) communicating between an outlet pipe of the first casing and the first condenser. Therefore, raw water is heated by the first condenser and the second condenser and supplied to the second splitter device, whereafter a part of the raw water supplied to the second splitter device is evaporated and then condensed by the second condenser, and the remaining raw water is supplied to the first splitter device, whereafter a part of the raw water supplied to the first splitter device is evaporated and then condensed by the first condenser, and the remaining raw water is discharged at 60°C or more from the first casing and introduced into the first condenser via the feedback pipe.

According to a second aspect of the present invention, there is provided a water purifying apparatus (1, 1A) which comprises: a casing (11) having a circulation path; a splitter device (15) disposed within the casing (11) and adapted to split raw water into droplets and create a carrier airflow (A1) capable of circulating along the circulation path and carrying water vapor evaporated from the droplets (D1); a demister (18, 18C) disposed within the casing (11) at a position downstream of the splitter device (15) in a direction of the carrier airflow and adapted to remove the droplets (D1) while permitting the water vapor to pass therethrough; and a condenser (19) disposed within the casing (11) at a position downstream of the demister (18, 18C) in the direction of the carrier airflow and adapted to condense the water vapor flowing out of the demister (18, 18C) to create purified water. The demister (18, 18C) comprises a plurality of demister plates (180, 180C) arranged at intervals of a predetermined distance to define a flow passage therebetween.

In the water purifying apparatus according the second aspect of the present invention, each of the demister plates (180) may be bent.

Alternatively, each of the demister plates (180C) may be curved.

The demister plate (180, 18C) may have a wave shape.

According to a third aspect of the present invention, there is provided a water purifying apparatus (1B) which comprises: a casing (11) having a circulation path; a splitter device (15) disposed within the casing (11) and adapted to split raw water into droplets (D1) and create a carrier airflow (A1) capable of circulating along the circulation path and carrying water vapor evaporated from the droplets (D1); and a condenser disposed within the casing (11) at a position downstream of the splitter device (15) in a direction of the carrier airflow and adapted to condense the water vapor to create purified water. The splitter device (15) comprises a rotary shaft (15a) extending in an up-down direction of the casing (11), a blade (152A to 152Q) radially attached to the rotary shaft (15a), and a guide (16, 16A, 16B, 16C) disposed upstream of the blade (152A to 152Q) in the direction of the carrier airflow.

In the water purifying apparatus according the third aspect of the present invention, the guide may be composed of a curved guide plate (16).

Alternatively, the guide (16A, 16B, 16C) may be composed of a plurality of guide plates arranged in mutually spaced-apart relation.

In this case, each of the guide plates (161A to 161I, 162A to 162I) may be disposed obliquely with respect to a radial direction having a center at the rotational axis.

Each of the guide plates (162A to 162I) may be curved.

The guide (16C) may include a plurality of first guide plates (163A to 163K), and a second guide plate (164A to 164L) disposed outside the first guide plates (163A to 163K) and between adjacent ones of the first guide plates (163A to 163K)

[EFFECT OF THE INVENTION]

In the water purifying apparatus according to the first aspect of the present invention, the blade has irregularities, so that it becomes possible to facilitate deforming raw water and efficiently break or split the raw water into droplets to improve efficiency for collecting purified water from raw water.

The blade may be disposed obliquely with respect to its rotational axis. In this case, when raw water hits against the blade, it pushed the blade in a rotation direction of the blade to accelerate the rotation of the blade, so that it becomes possible to facilitate splitting (breaking) the raw water into droplets and creating the carrier airflow.

The blade may be formed by cutting a disk-shaped member in a radial direction thereof to prepare a sector-shaped piece, and twisting the sector-shaped piece. In this case, the blade can be fabricated in a simple process.

The water purifying apparatus may comprise a circulator attached to the rotary shaft of the splitter device. In this case, the circulator can be provided in a space-saving manner.

The condenser may include the first condenser and the second condenser. In this case, the first condenser and the second condenser can heat raw water to further raise a temperature of the raw water, so that it becomes possible to enhance droplet evaporation efficiency to improve the efficiency for collecting purified water from raw water. Further, the splitter device may include the first splitter device and the second splitter device which have a common rotary shaft. In this case, it becomes possible to achieve space-saving arrangement.

The finally remaining raw water at 60°C or more may be supplied to the first condenser via the feedback pipe. In this case, when raw water is supplied to the first splitter and the second splitter, it can be heated up to 60°C or more. At 60°C or more, the evaporation of water sharply increases and thus an amount of purified water to be collected by the first and second condensers also increases. This makes it possible to improve the efficiency for collecting purified water from raw water. In addition, the finally remaining raw water can be reused, so that it becomes possible to further improve the efficiency for collecting purified water from raw water.

In the water purifying apparatus according to the second aspect of the present invention, when droplets hit against the demister plates, the demister plates can efficiently trap the droplets. This makes it possible to obtain low-impurity purified water from raw water.

In the water purifying apparatus according to the third aspect of the present invention, the guide can strengthen the carrier airflow and improve circulation efficiency of the carrier airflow within the casing, so that it becomes possible to enhance droplet evaporation efficiency to improve the efficiency for collecting purified water from raw water.

BRIEF DESCRIPTION OF THE DRAWINGS

FIG. 1 is a side view illustrating a water purifying apparatus according to a first embodiment of the present invention.
FIG. 2 is a top plan view of the water purifying apparatus illustrated in FIG. 1.
FIG. 3 is a top plan view of a disk blade illustrated in FIG. 2.
FIG. 4 is a side view of the disk blade illustrated in FIG. 3.
FIG. 5(A) is a top plan view illustrating a modified blade segment.
FIG. 5(B) is a top plan view illustrating another modified blade segment.
FIGS. 6(A) and 6(B) illustrate a modified disk blade, wherein FIG. 6(A) is a top plan view, and FIG. 6(B) is a sectional view taken along the line VIB-VIB in FIG. 6(A).
FIG. 7 is a perspective view of a demister plate of a demister illustrated in FIG. 1.
FIG. 8 is a top plan view illustrating a water purifying apparatus according to a second embodiment of the present invention.
FIG. 9 is a perspective view of a demister plate of a demister illustrated in FIG. 8.
FIG. 10 is a top plan view illustrating a water purifying apparatus according to a third embodiment of the present invention.
FIG. 11 is a fragmentary enlarged top plan view of a splitter device illustrated in FIG. 10.
FIGS. 12(A) and 12(B) are fragmentary top plan views illustrating two types of modified guides.
FIG. 13 is a side view illustrating a water purifying apparatus according to a fourth embodiment of the present invention.
FIG. 14 is a schematic diagrams illustrating a water purifying apparatus according to a fifth embodiment of the present invention.
FIG. 15 is a graph illustrating a measurement result of respective thermal resistances of a splitter device in the first embodiment, and an evaporator with a horizontal sirocco fan as a comparative example.
FIG. 16 is a graph illustrating a measurement result of a thermal resistance of a disk blade in the third embodiment.

DESCRIPTION OF EMBODIMENTS

With reference to the drawings, various embodiments of the present invention will now be specifically described.

[FIRST EMBODIMENT]

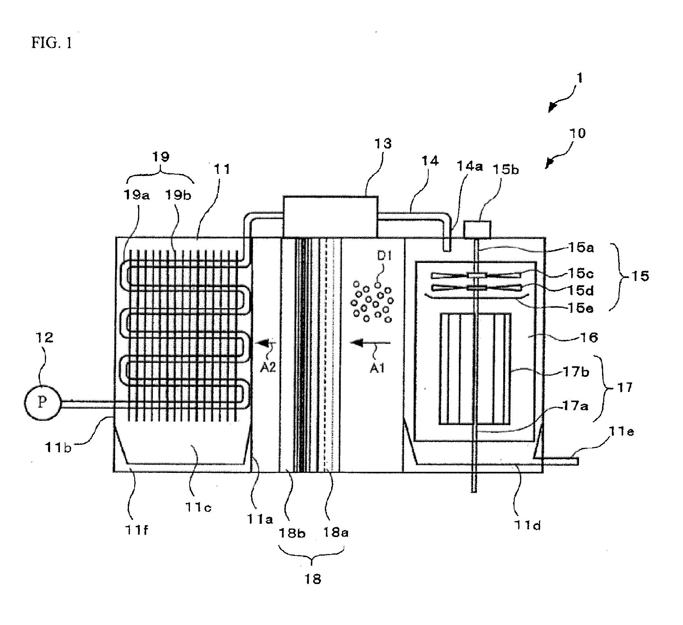

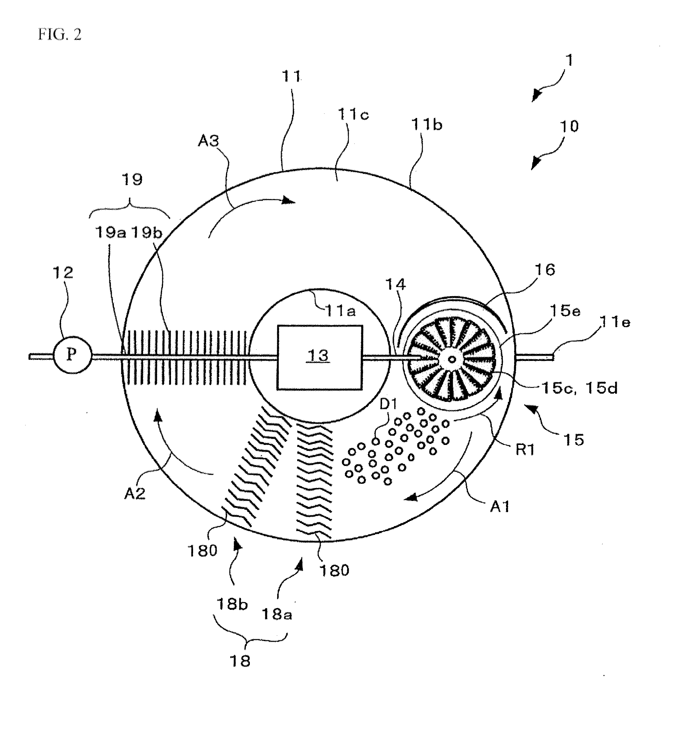

As illustrated in FIGS. 1 and 2, a water purifying apparatus 1 has an evaporation-condensation system 10. This system 10 comprises an annular-shaped casing 11 adapted to permit circulation of airflow therethrough, a pump 12 disposed outside the casing 11, and a heater 13 disposed on a top of the casing 11. The water purifying apparatus 1 comprises a splitter device 15 disposed within the casing 11 and below the heater 13, and a guide 16 disposed behind the splitter device 15, and a circulator 17 disposed in coaxial relation with the splitter device 15 and having a fan, such as a sirocco fan. The water purifying apparatus 1 further comprises a demister group 18 comprising demisters 18a and 18b, and a condenser 19 disposed downstream of the demister group 18.

The casing 11 comprises an inner cylinder 11a, an outer cylinder 11b disposed outside the inner cylinder 11a, and an annular space 11c defined between the inner cylinder 11a and the outer cylinder 11b. This space 11c is a flow passage serving as a circulation path for permitting airflow to circulate therealong. The casing 11 has a liquid receiver 11d just below the splitter device 15. This liquid receiver 11d communicates with an outside of the casing via an outlet pipe 11e. The casing 11 further has a liquid receiver 11f just below the condenser 19. This liquid receiver 11f communicates with an external water storage tank via a non-illustrated pipe.

The pump 12 is connected to the condenser 19. The pump 12 is operable to pump up raw water and supply the raw water to the condenser 19. For example, the raw water may be seawater, lake water or industrial wastewater.

An inlet of the heater 13 is connected to the condenser 19 via a pipe. An outlet of the heater 13 is connected to a pipe 14 having a nozzle 14a. The heater 13 comprises a water tank having a hot water, a heat-exchanging tube disposed in the hot water of the water tank, and fins attached to the heat-exchanging tube. For example, the hot water may be obtained through heating by solar light or a heating wire. Alternatively, the hot water may be obtained through heating with heat generated by burning or oxidizing magnesium in water.

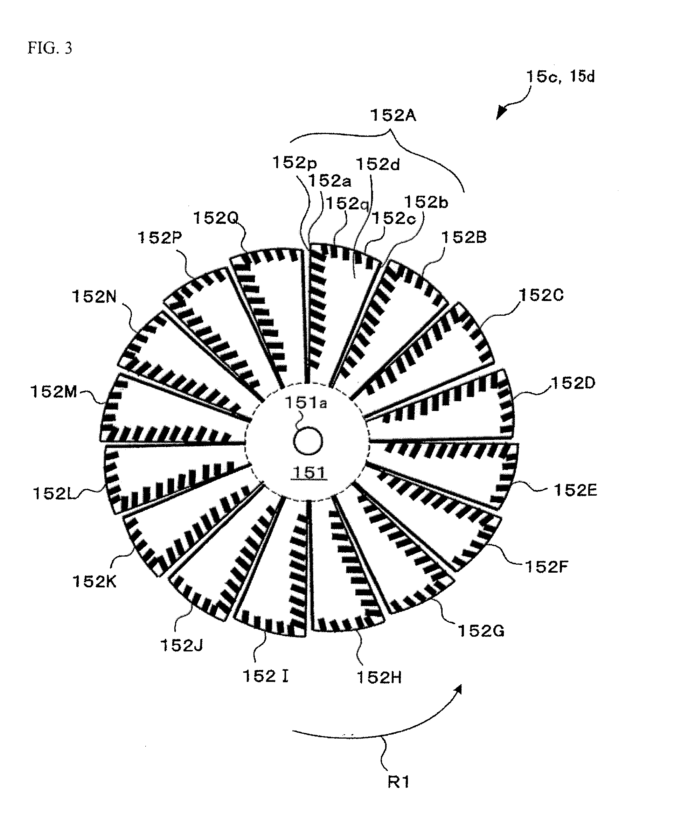

The splitter device 15 comprises a rotary shaft 15a extending in an up-down direction of the casing 11, and a motor 15b for driving the rotary shaft 15a. The splitter device 15 further comprises a pair of disk blades 15c, 15d attached to the rotary shaft 15a in a two-tiered manner and each disposed horizontally. As illustrated in FIG. 3, each of the disk blades 15c, 15d has a circular central portion 151 formed with a central hole 151a for attaching the rotary shaft 15a thereto. Each of the disk blades 15c, 15d has a plurality of sector-shaped blade segments 152A, 152B, 152C, 152D, 152E, 152F, 152G, 152H, 152I, 152J, 152K, 152L, 152M, 152N, 152P, 152P each arranged around the central portion 151 at a predetermined angle on the rotary shaft 15a.

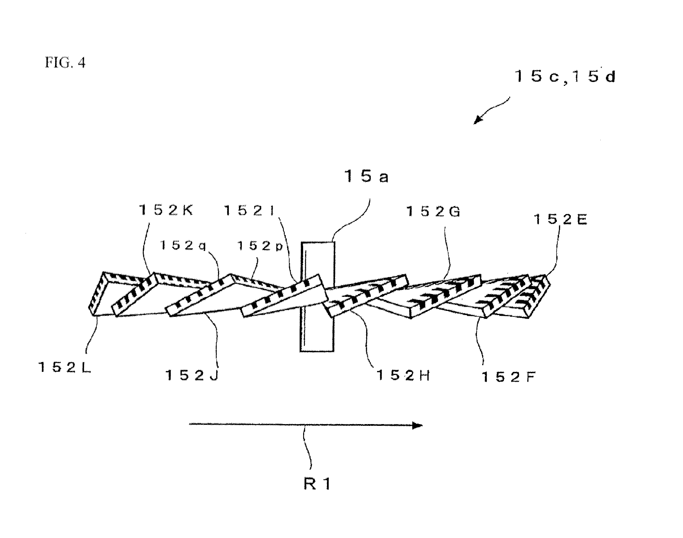

Each of the sector-shaped blade segments 152A to 152Q has a leading edge 152a and a trailing edge 152b which extend from the central portion 151 in a radial direction of the disk blade to form a predetermined angle therebetween. Each of the blade segments 152A to 152Q further has a peripheral edge 152c extending between respective distal ends of the leading edge 152a and the trailing edge 152b, in an arc pattern. Each of the blade segments 152A to 152Q has a blade surface 152d surrounded by the leading edge 152a, the trailing edge 152b and the peripheral edge 152c. In this embodiment, the leading edge 152a is located forward of the trailing edge 152b in a rotation direction R1 of the disk blade. Further, the leading edge 152a is positioned above the central portion 151, and the trailing edge 152b is positioned below the central portion 151. Specifically, as illustrated in FIG. 4, each of the blade segments 152A to 152Q is disposed obliquely with respect to the rotary shaft 15a and the central portion 151. Each of the blade segments 152A to 152Q has an inclination angle of 10 to 45 degrees with respect to the central region 151. For example, the inclination angle may be set to 25 degrees.

Each of the blade segments 152A to 152Q has a leading-edge concave portion 152p depressed from the blade surface 152d and extending from the leading edge 152a in a circumferential direction of the disk blade. Each of the blade segments 152A to 152Q has a peripheral-edge concave portion 152q extending from the peripheral edge 152c in the radial direction. Each of the leading-edge concave portion 152p and the peripheral-edge concave portion 152q has a rectangular shape in top plan view, and a predetermined depth.

Each of the blade segments 152A to 152Q is fabricated in the following manner. A disk-shaped member is cut from an outer periphery toward a central portion 151 thereof at predetermined angular intervals to prepare a plurality of sector-shaped pieces. Then, each of the sector-shaped pieces is twisted with respect to the central portion 151 in a counterclockwise direction so that the leading edge 152a is located at an upper portion and the trailing edge 152b is located below the leading edge 152a.

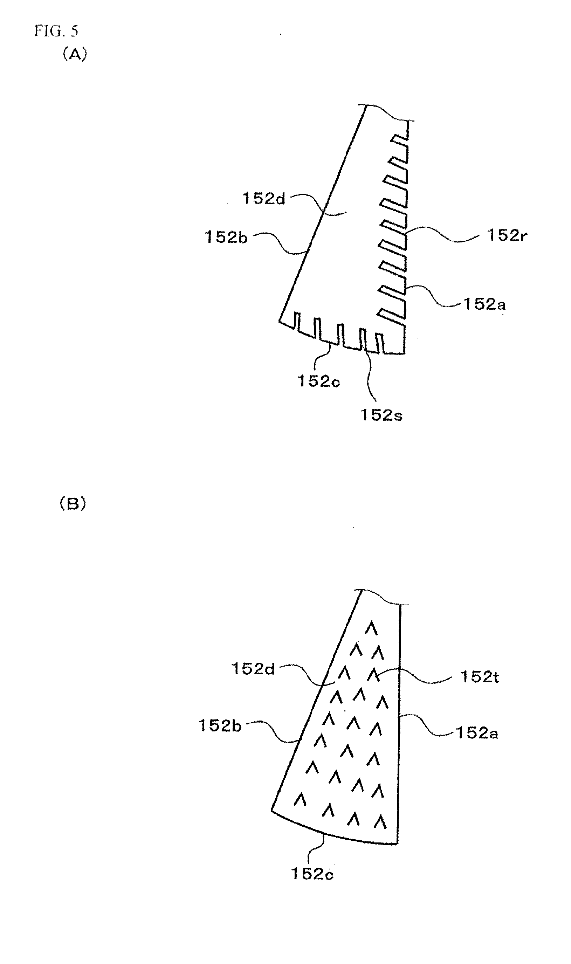

Alternatively, as illustrated in FIG 5(A), each of the blade segments 152A to 152Q may have a leading-edge concave portion 152r and a peripheral-edge concave portion 152s formed by partially cutting out the leading edge 152a and the peripheral edge 152c, respectively.

Alternatively, as illustrated in FIG. 5(B), each of the blade segments 152A to 152Q may have a protrusion protruding from the blade surface 152d, in place of the leading-edge concave portion and the peripheral-edge concave portion.

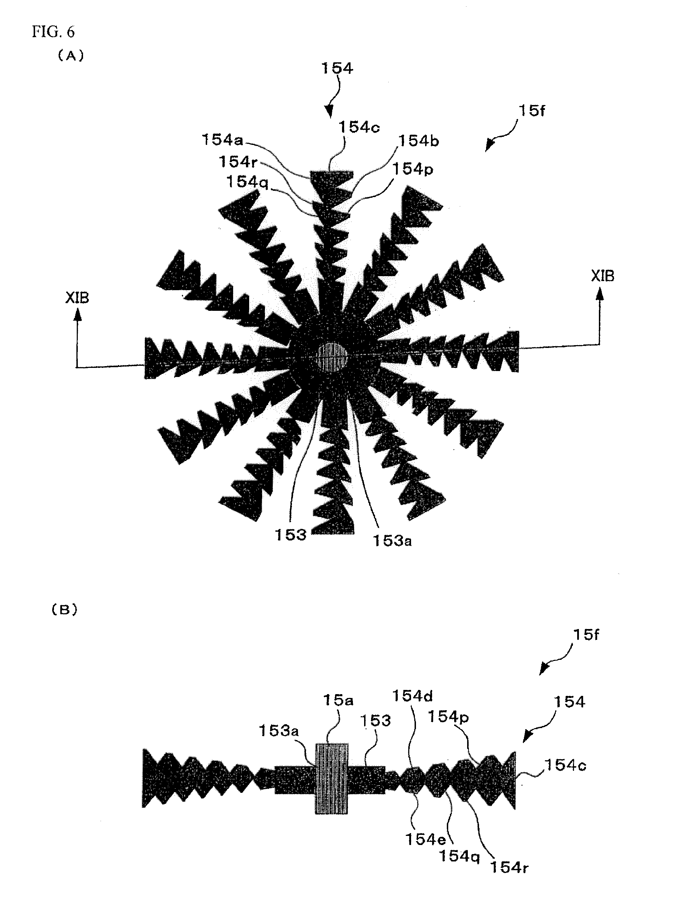

Alternatively, a disk blade 15f illustrated in FIGS. 6(A) and 6(B) may be used. The disk blade 15f has a circular central portion 153 formed with a central hole 153a for attaching the rotary shaft 15a thereto. The disk blade 15f has a plurality of sector-shaped blade segments 154 each arranged around the central portion 153 at a predetermined central angle. Each of the blade segments 154 has a thickness which gradually increases toward a distal end thereof.

Each of the blade segments 154 has a leading edge 154a and a trailing edge 154b each extending from the central portion 153 in a radial direction of the disk blade. Each of the blade segments 154 further has a peripheral edge 154c extending between respective distal ends of the leading edge 154a and the trailing edge 154b. Each of the blade segments 154 has an upper surface 154d and a lower surface 154e between the leading edge 154a and the trailing edge 154b.

The blade segments 154 has first and second concave portions 154p, 154q arranged at intervals of a predetermined distance in a radial direction of the disc blade and each extending obliquely with respect to the radial direction. The first and second concave portions 154p, 154q are formed over the leading edge 152a, the trailing edge 152b, the upper surface 154d and the lower surface 154e. Each of the blade segments 154 further has a convex portion 156r between the first and second concave portions 154p, 154q. The convex portion 154r is formed to become thicker that the first and second concave portions 154p, 154q.

The disk blade 15f can efficiently split raw water into droplets by the convex portion 154r and the first and second concave portions 154p, 154q.

As illustrated in FIG. 1, the guide 16 is disposed upstream (rearward) of the splitter device 15 and the circulator 17 in a direction of a carrier airflow A1. For example, the guide 16 may be a guide plate curved in an arc of a circle having a center at the rotary shaft 15a. The guide 16 is disposed such that it has opposite side (lateral) edges each spaced apart from a respective one of the inner cylinder 11a and the outer cylinder 11b to define a flow passage therebetween. The guide 16 is also disposed such that it has an upper edge and lower edge each spaced apart from a respective one of a top wall and a bottom wall of the casing 11 to define a flow passage therebetween.

The circulator 17 comprises a rotary shaft 17a integral with the rotary shaft 15a of the splitter device 15, and a sirocco fan 17b attached to the rotary shaft 17a. The sirocco fan 17b is capable of being rotated about the rotary shaft 17a to create airflows A1, A2, A3 in a clockwise direction.

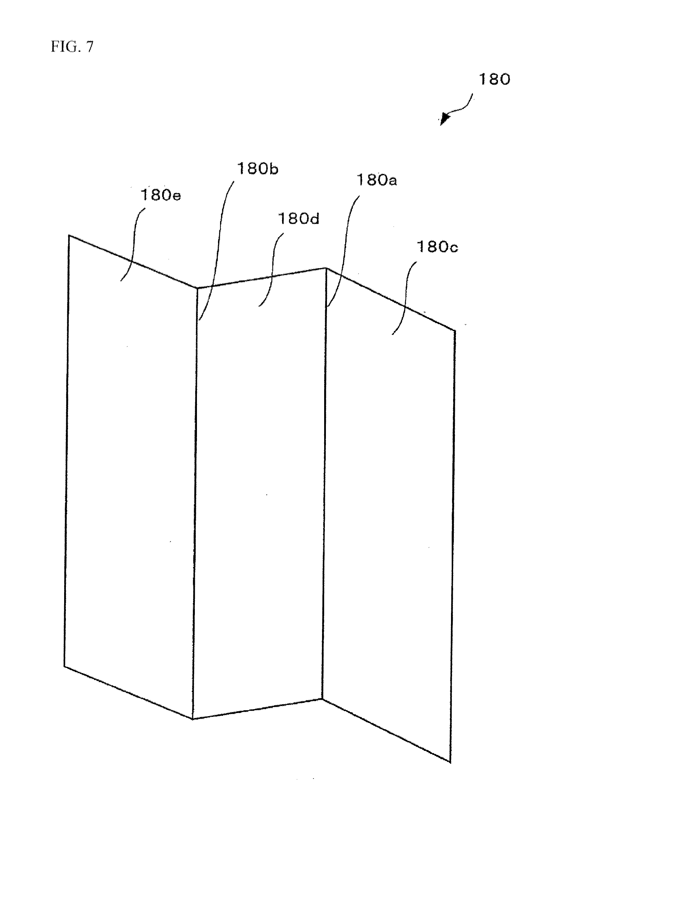

The demister 18 has two demister groups 18a, 18b arranged in series along the path of the carrier airflow A1 within the casing 11. Each of the demister groups 18a, 18b comprises a plurality of demister plates 180 arranged at intervals of a predetermined distance to define a flow passage therebetween. As illustrated in FIG. 7, each of the demister plates 180 is bent to form a ridge 180a and a valley 180b, and have a wave shape as a whole. Each of the demister plates 180 has a first wall 180c, a second wall 180d extending obliquely with respect to the first wall 180c, and a third wall 180e extending in parallel to the first wall 180c and obliquely with respect to the second wall 180d.

The condenser 19 comprises a heat-exchanging tube 19a, and fins 19b attached to the heat-exchanging tube 19a. The heat-exchanging tube 19a extends upwardly from a lower region of the casing while repeatedly turning in the opposite direction.

The usage of the water purifying apparatus 1 will be described below.

As illustrated in FIG. 1, the pump 12 pumps up raw water. This raw water is supplied from the nozzle 14a to the splitter device 15 via the condenser 19, the heater 13 and the pipe 14. In this process, the raw water is heated through the fins 19b while passing through the heat-exchanging tube 19a of the condenser 19. Then, the raw water is further heater by the hot water in the water tank 13 while passing through the heat-exchanging tube of the heater 13. As a result, the raw water is heated up to about 70 to 90°C.

The heated raw water is injected from the nozzle 14a onto the disk blades 15c, 15d of the splitter device 15. At this time, the disk blades 15c, 15d of the splitter device 15 are being rotated about the rotary shaft 15a in the counterclockwise direction R1 (see FIG. 3). The raw water hits against the blade segments 152A to 152Q, so that it is broken or split into small droplets (mist). In this process, the leading-edge concave portion 152p and the peripheral-edge concave portion 152q in each of the blade segments 152A to 152Q can easily cut into the raw water and efficiently split the raw water, because they have sharp corners (fringes).

The droplets are spread from the disk blades 15c, 15d in all directions while being partially evaporated. A part of the resulting droplets and water vapor is moved toward the demister 18. The remaining droplets and the remaining water vapor hit against the guide 16. The remaining droplets are dropped down along the guide 16, and, after being received in the liquid receiver 11d, discharged from the outlet pipe 11e. The remaining water vapor is guided in the clockwise direction by the guide 16, and merged with the carrier airflow A1.

As above, the guide 16 blocks droplets spread from the disk blades 15c, 15d in the counterclockwise direction of the casing 11. Thus, for example, in a situation where an airflow-generating blower unit is disposed rearward (upstream) of the splitter device 15 and the droplets contain salt, it becomes possible to prevent a malfunction of the blower unit due to the salt.

Each of the blade segments 152A to 152Q is inclined with respect to the rotary shaft 15a to allow the leading edge 152a to be located above the trailing edge 152b, as illustrated in FIG. 4. Thus, when the raw water hits against the blade surfaces 152d of the blade segments 152A to 152Q, it pushes the blade segments 152A to 152Q in the rotation direction R1 to accelerate the rotation of the blade segments 152A to 152Q. This allows the disk blades 15c, 15d to create airflow easily and effectively.

The sirocco fan 17b of the circulator 17 is rotated about the rotary shaft 17a to strengthen the airflow. The sirocco fan 17b creates airflow in all directions. However, the guide 16 can guide any airflow directed in the counterclockwise direction, in the clockwise direction within the casing 11. Thus, the carrier airflow A1 flows in the clockwise direction within the casing 11.

The droplets D1 and water vapor are carried by the carrier airflow A1 in such a manner as to reach the demister 18. In this process, a part of the droplets D1 is further evaporated and transformed into water vapor. Specifically, the droplets each having a small particle size have a relatively large surface area, so that they are more likely to be evaporated or vaporized. In addition, the carrier airflow A1 promotes the evaporation of the droplets D1.

The carrier airflow A1 with the droplets D1 and water vapor is introduced into a gap between adjacent ones 180, 180 of the demister plates in each of the first and second demister groups 18a, 18b of the demister 18. Specifically, the droplets and the water vapor pass through spaces between respective ones of the opposed first walls 180c, 180c, between the opposed second walls 180d, 180d, and between the opposed third walls 180e, 180e as illustrated in FIG. 7. In this process, the droplets hits against the first, second and third walls 180c, 180d, 180e, and are trapped. The trapped droplets are guided to flow downwardly along the first, second and third walls 180c, 180d, 180e, and stored in a lower portion of the casing 11. In this process, each of the demister plates 180 is bent along the ridge 180a and the valley 180b, so that a flow passage between the adjacent demister plates 180, 180 is formed as an S-shaped meandering gap. The droplets cannot change in direction, at the ridge 180a and the valley 180b, and therefore hit against the walls 180c, 180d, 180e. Thus, the droplets can be efficiently trapped by the walls 180c, 180d, 180e. On the other hand, the carrier airflow A1 and the water vapor can change in direction, at the ridge 180a and the valley 180b, so that they pass through the flow passage between opposed ones of the walls 180c, 180d, 180e, and flow out of the demister 18. In other words, the demister 10 allows the carrier airflow A1 and the water vapor to smoothly pass therethrough without posing flow resistance against the carrier airflow A1 and the water vapor.

The water vapor is carried by the carrier airflow A2 in such a manner as to flow into the condenser 19. The vapor is brought into contact with the fins 19b. Thus, the water vapor is cooled through heat-exchange with raw water flowing through the heat-exchanging tube 19a. In this process, the water vapor is condensed into water while releasing latent heat of condensation. On the other hand, the raw water in the heat-exchanging tube 19a is heated by the latent heat of condensation, so that a temperature of the raw water is raised. The resulting water is obtained as purified water free of impurities such as salt and other ions. The purified water is received in the liquid receiver 11f in a bottom portion of the casing 11, and discharged to the external water storage tank.

The carrier airflow A3 after passing through the condenser 19 is returned to the splitter device 15. As above, the carrier airflows A1, A2, A3 circulate within the casing 11, so that it becomes possible to reduce power consumption of the motor 15b to achieve efficient energy utilization.

In the first embodiment, each of the blade segments 152A to 152Q in each of the disk blades 15c, 15d has the concave portion (152p, 152q, 152r, 152s) or the protrusion 152t, so that it becomes possible to efficiently split raw water into droplets to improve efficiency for collecting purified water from raw water.

In the first embodiment, each of the blade segments 152A to 152Q is disposed obliquely with respect to the rotary shaft 15a. Thus, when raw water hits against the blade segments 152A to 152Q from thereabove, it pushed the blade segments 152A to 152Q in the rotation direction R1 to accelerate the rotation of the blade segments 152A to 152Q. This makes it possible to facilitate splitting the raw water into droplets and creating the carrier airflow.

Each of the blade segments 152A to 152Q is formed by cutting a disk-shaped member in a radial direction thereof to prepare a sector-shaped piece, and twisting the sector-shaped piece. Thus, the blade segment can be fabricated in a simple process.

The sirocco fan 17b of the circulator 17 is attached to the rotary shaft 17a extending from the rotary shaft 15a of the splitter device 15. Thus, the circulator 17 can be provided in a space-saving manner.

Each of the demister plates 180 of the demister 10 is bent along the ridge 180a and the valley 180b to have a wave shape. Thus, droplets cannot change in direction, at the ridge 180a and the valley 180b, and therefore hit against the demister plate, which allows each of the demister plates 180 to efficiently trap the droplets.

[SECOND EMBODIMENT]

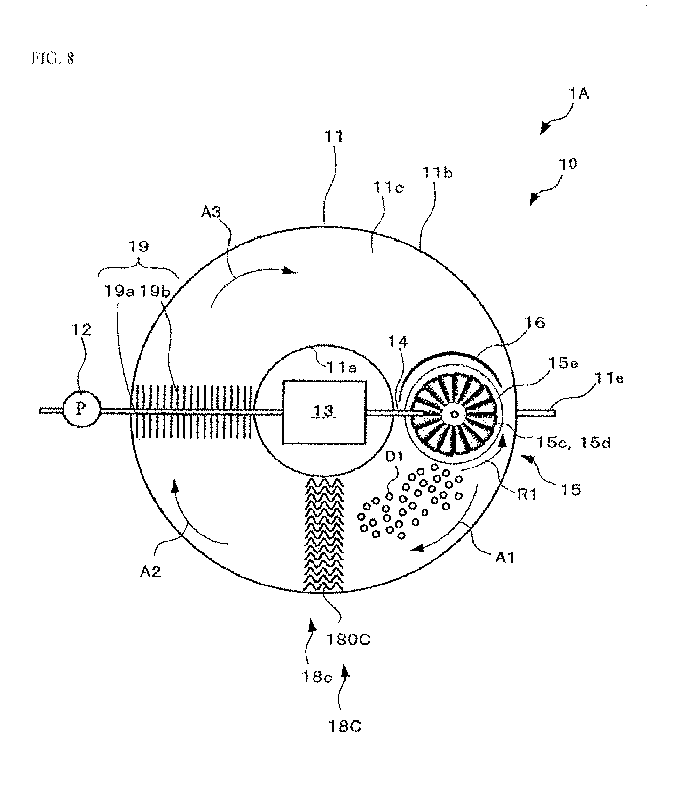

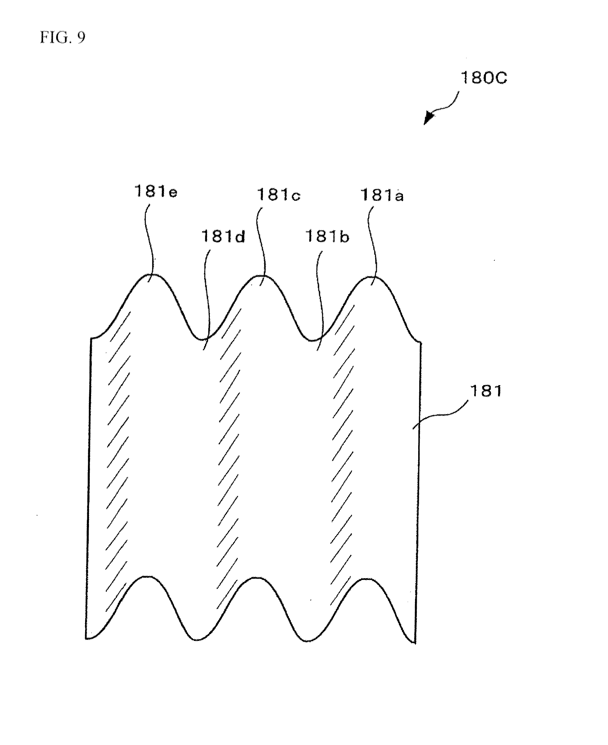

As illustrated in FIG. 8, a water purifying apparatus 1A according to a second embodiment of the present invention has a modified demister 18C. The demister 18C comprises a demister plate group 18c. The demister plate group 18c consists of a plurality of demister plates 180C arranged in mutually spaced-apart relation, i.e., at interval of a predetermined distance, to defined a flow passage therebetween. As illustrated in FIG 9, each of the demister plates 180C is composed of one sheet 181 curved along a plurality of lines 181a, 181b, 181c, 181d. Each of the demister plates 180C is formed in a wave shape which has a plurality of valley portions 181a, 181c, 181d, and a plurality of crest portions 181b, 181d each located between adjacent ones of the valley portions 181a, 181c, 181d. Adjacent ones of the demister plates 180C define an S-shaped meandering flow passage.

In the second embodiment, a carrier airflow A1 with water vapor and droplets flows between adjacent ones 180C, 180C of the demister plates. The carrier airflow A1 and the water vapor can change in direction, in the curved valley portions 181a, 181c, 181d and the curved crest portions 181b, 181d, and flow out of the demister 18C. On the other hand, the droplets cannot change in direction, in the curved valley portions 181a, 181c, 181d and the curved crest portions 181b, 181d, and therefore hit against the adjacent demister plates 180C, 180C. In this manner, low-impurity purified water is obtained from raw water.

[THIRD EMBODIMENT]

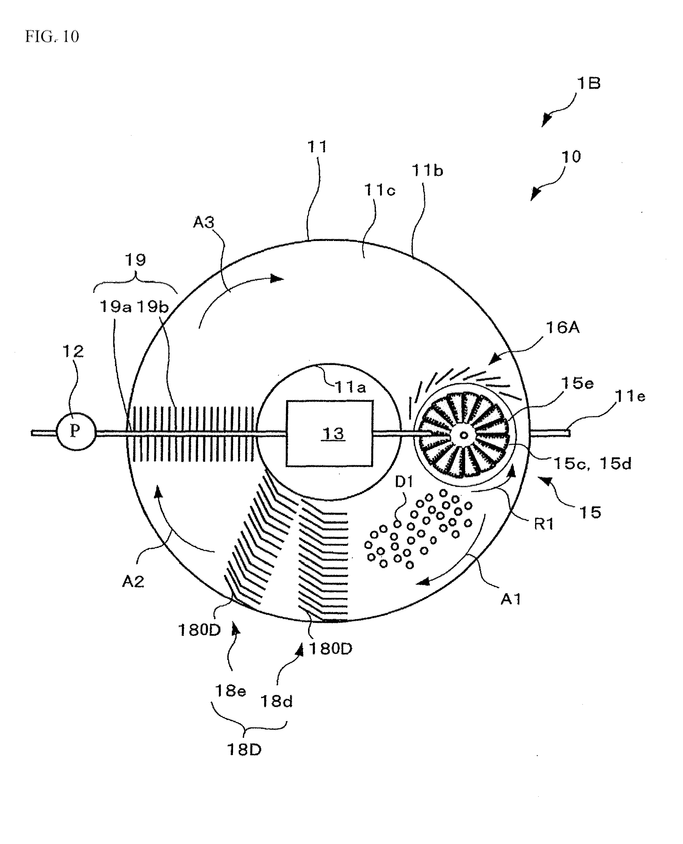

As illustrated in FIG. 10, a water purifying apparatus 1B according to a third embodiment of the present invention has a modified guide 16A.

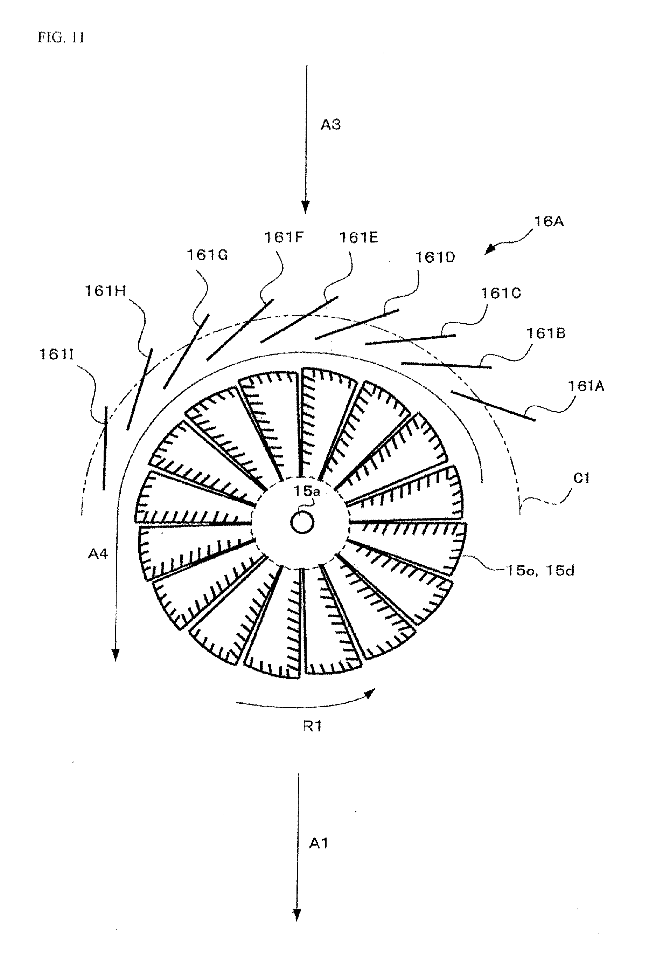

As illustrated in FIG. 11, the guide 16A is disposed in concentric relation with the disk blades 15c, 15d. More specifically, the guide 16A comprises a plurality of guide plates 161A, 161B, 161C, 161D, 161E, 161F, 161G, 161H, 1611 arranged in mutually spaced-apart relation, i.e., at interval of a predetermined distance, along a circle C1 having a center at a rotary shaft 15a. Each of the guide plates 161A to 161 is disposed obliquely with respect to a direction of tangent to the circle C1. In other words, each of the guide plates 161A to 161I is disposed obliquely with respect to a radial direction having a center at the rotary shaft 15a. Each of the guide plates 161A to 161I is disposed such that it has a forward end and a rear end in a rotation direction of the disk blades 15c, 15d, and gradually comes closer to the rotary shaft 15a in a direction from the rear end to the forward end. Adjacent ones of the guide plates 161A to 161I are partially opposed to each other to defined a flow passage therebetween.

As shown in FIG. 10, a demister 18D comprises two demister groups 18d, 18e each composed of a plurality of demister plates 180D. Each of the demister plates 180D is bent along one line.

The usage of the water purifying apparatus will be described below.

In FIG. 10, the disk blades 15c, 15d and a non-illustrated sirocco fan are rotated in a counterclockwise direction R1. Thus, airflow is created around the disk blades 15c, 15d in all directions. In FIG. 11, the guide plates 161A to 161I guide the airflow in the counterclockwise direction R1 and create an airflow A4. The airflow A4 flows out of the guide plate 161I in a clockwise direction of a casing 11, and is merged with a carrier airflow A1. Thus, the carrier airflow A1 is strengthened.

On the other hand, the flow passage between the adjacent ones of the guide plates 161A to 161I permits a carrier airflow A3 coming from a rearward (upstream) side thereof to pass therethrough, so that the carrier airflow A3 is merged with the airflow A4. This makes it possible to improve circulation efficiency of carrier airflow within the casing 11. Further, the guide plates 161A to 161I blocks droplets spread from the disk blades 15c, 15d in the counterclockwise direction of the casing 11. Thus, for example, in a situation where an airflow-generating blower unit is disposed rearward (upstream) of the splitter device 15 and the droplets contain salt, the guide 16A can prevent a malfunction of the blower unit due to the salt.

In the third embodiment, the guide 16A can strengthen the carrier airflow and improve circulation efficiency of the carrier airflow within the casing 11, so that it becomes possible to enhance the efficiency for evaporating droplets D1 to improve the efficiency for collecting purified water from raw water.

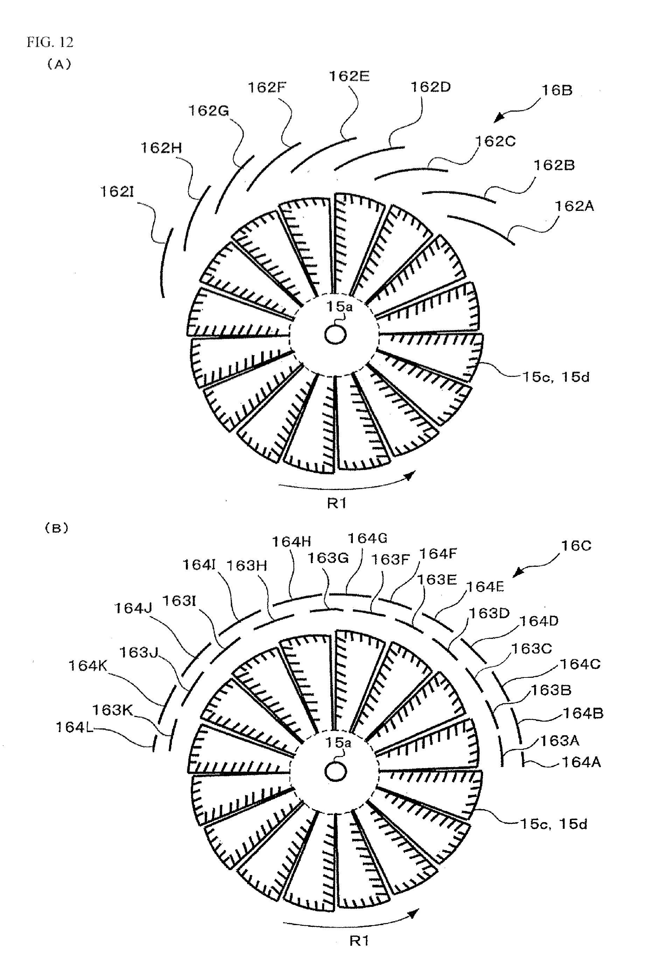

As illustrated in FIG. 12(A), the modified guide may be another type 16B which comprises a plurality of curved guide plates 162A, 162B, 162C, 162D, 162E, 162F, 162G, 162H, 162I. In this guide 16B, the curved guide plates 162A to 162I can more smoothly guide airflow.

Alternatively, as illustrated in FIG. 12(B), the modified guide may be another type 16C which comprises a plurality of first guide plates 163A, 163B, 163C, 163D, 163E, 163F, 163G, 163H, 163I, 163J, 163K arranged at intervals of a predetermined distance along a circle having a center at the rotary shaft 15a. The guide 16C further comprises a plurality of second guide plates 164A, 164B, 164C, 164D, 164E, 164F, 164G, 164H, 164I, 164J, 164K, 164L arranged outside the first guide plates 163A to 163K in concentric relation therewith. Each of the second guide plates 164 to 164L is disposed between adjacent ones of the first guide plates 163A to 163K to cover a gap between the adjacent ones of the first guide plates 163A to 163K.

In this guide 16C, the second guide plates 164 to 164L can block droplets from being spread from the gaps between respective adjacent ones of the first guide plates 163A to 163K. Thus, for example, in a situation where an airflow-generating blower unit is disposed rearward (upstream) of the splitter device 15 and the droplets contain salt, the guide 16C can prevent a malfunction of the blower unit due to the salt.

[FOURTH EMBODIMENT]

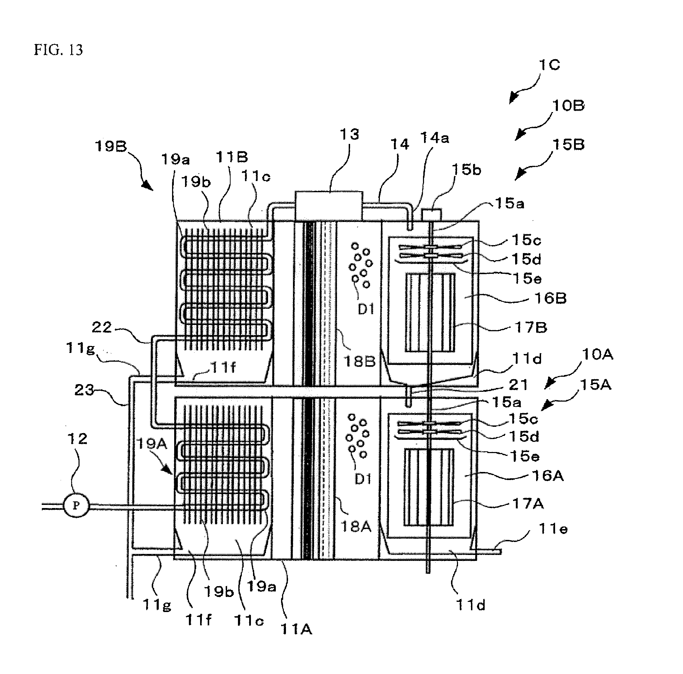

As illustrated in FIG. 13, a water purifying apparatus 1C according to a fourth embodiment of the present invention has a two-tiered structure of lower and upper evaporation-condensation systems 10A, 10B. Each of the lower and upper systems 10A, 10B comprises a casing (11A, 11B), a splitter device (15A, 15B), a circulator (17A, 17B), a demister (18A, 18B) and a condenser (19A, 19B), each which is identical to a corresponding one of the components in the first embodiment.

The lower and upper casings 11A, 11B have a commutation pipe 21 communicating therebetween. The communication pipe 21 is adapted to introduce raw water from an upper liquid receiver 11d of the upper casing 11B to the lower casing 11A. The lower and upper casings 11A, 11B further have an outlet pipe 23 connected to respective outlet pipes 11g, 11g of upper and lower liquid receivers 11f, 11f of the upper and lower casings 11A, 11B.

The lower splitter device 15A and the upper splitter device 15B have a common rotary shaft 15a. This rotary shaft 15a penetrates through the lower and upper casings 11A, 11B in an up-down direction. A pair of disk blades 15c, 15d, a tray 15e and a circulator (17A, 17B) in each of the lower splitter device 15A and the upper splitter device 15B are attached to the rotary shaft 15a.

A heat-exchanging tube 19a of the upper condenser 19 is connected to a heat-exchanging tube 19a of the lower condenser 19 through a communication pipe 22.

The usage of the water purifying apparatus 1C will be described below.

Raw water is pumped up by a pump 12, and supplied to the lower condenser 19A. The raw water is heated by the lower condenser 19A, and supplied to the upper condenser 198 via the communication pipe 22. The raw water is heated by the upper condenser 19B, and supplied to a heater 13. The raw water is heated by the heater 13, and supplied from the nozzle 14a to the upper splitter device 15B via a pipe 14. The raw water is split into droplets by the rotating disk blades 15c, 15d of the upper splitter 15B.

A part of the droplets is carried to the upper demister 18B by a carrier airflow created by the upper circulator 17B, while being partially evaporated. The residual droplets are removed by the demister 18B. After passing through the demister 18B, the water vapor is carried to the condenser 19B by the carrier airflow. The water vapor is condensed into purified water by the condenser 19B. This purified water is received in the upper liquid receiver 11f.

On the other hand, the remaining droplets hit against the upper guide 16B, and dropped down to the upper liquid receiver 11d. The dropped droplets return to raw water while being collected to the liquid receiver 11d. The resulting raw water is dropped down onto the disk blades 15c, 15d of the lower splitter device 15A via the communication pipe 21. A part of the raw water is split into droplets by the lower disk blades 15c, 15d. A part of the droplets is carried to the lower demister 18A by a carrier airflow created by the lower circulator 17A, while being partially evaporated. The remaining droplets hits against the lower guide 16A, and, after being received in the lower liquid receiver 11d, discharged from an outlet pipe 11e.

The droplets in the carrier airflow are removed by the lower demister 18A. After passing through the demister 18A, the water vapor is carried to the lower condenser 19A by the carrier airflow. The water vapor is condensed into purified water by the condenser 19A. This purified water is received in the lower liquid receiver 11f. The purified water is collected from the upper and lower liquid receivers 11f. 11f via the outlet pipes 11g, 11g and the pipe 23.

In the fourth embodiment, the lower and upper condensers 19A, 19B can heat raw water to raise a temperature of the raw water, so that it becomes possible to reduce a load of the heater 13, and enhance droplet evaporation efficiency to improve the efficiency for collecting purifying water from raw water.

In the fourth embodiment, raw water collected by the upper liquid receiver 11d is supplied to the lower splitter device 15A, so that it becomes possible to reuse raw water to further improve the efficiency for collecting purified water from raw water.

In the fourth embodiment, the lower and upper splitter devices 15A, 15B and the lower and upper circulators 17A, 17B are attached to the common rotary shaft 15a extending in the up-down direction. This makes it possible to drive the splitter devices 15A, 15B and the circulators 17A, 17B by the single motor 15b. In particular, this configuration is advantageous to realizing a water purifying apparatus having a plurality of evaporation-condensation systems stacked in an up-down direction.

[FIFTH EMBODIMENT]

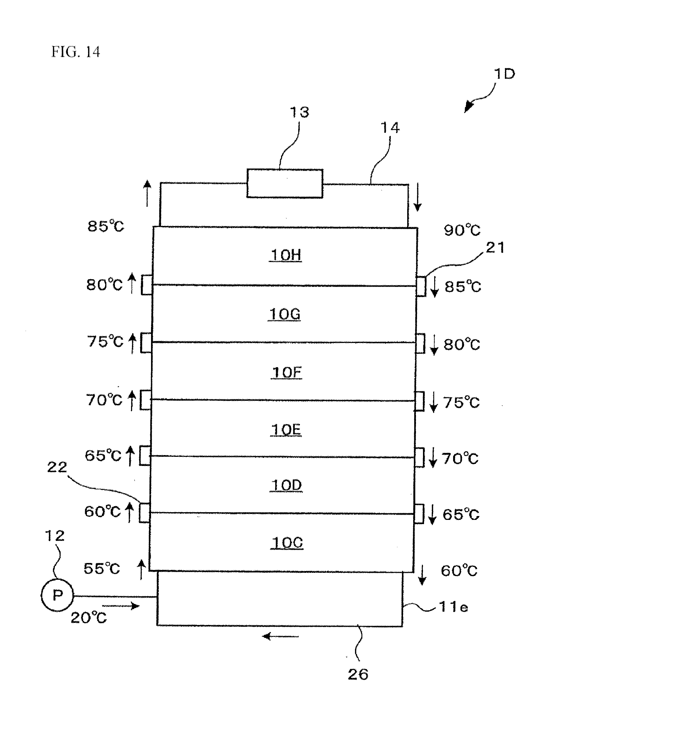

As illustrated in FIG. 14, a water purifying apparatus 1D according to a five embodiment of the present invention has six evaporation-condensation systems 10C, 10D, 10E, 10F, 10G, 10H stacked in an up-down direction. An internal configuration of each of the systems 10C to 10H is the same as that in the first embodiment. The casings 11 in adjacent ones of the systems 10C to 10H are connected to each other by the communication pipe 21 illustrated in FIG. 13. The condensers 19 in adjacent ones of the systems 10C to 10H are connected to each other by the communication pipe 22 illustrated in FIG. 13.

The water purifying apparatus 1D comprises a feedback pipe 26 which connects the outlet pipe 11e just below the splitter device to an inlet of the condenser in the evaporation-condensation system 10C. A pump 12 is connected to an intermediate portion of the feedback pipe 26.

The usage of the water purifying apparatus will be described below.

Un-evaporated remaining raw water at 60°C flows out of the outlet pipe 11e of the evaporation-condensation system 10C. This returned raw water flows toward the condenser of the system 10C via the feedback pipe 26. In this process, new raw water at 20°C is fed out from the pump 12, and mixed with the returned raw water. Consequently, the mixed raw water has a temperature of 55°C, and flows into the heat-exchanging tube of the condenser of the system 10C. The raw water is heated up to 60°C by the condenser, and then flows into the condenser of the evaporation-condensation system 10D. The raw water is heated up to 65°C by the condenser of the system 10D, and then flows into the condenser of the evaporation-condensation system 10E. Subsequently, the raw water is stepwise heated up to 85°C by the respective condensers of the evaporation-condensation systems 10E, 10F, 10G, 10H, and then flows out of the casing 11 of the system 10H.

The raw water is heated up to 90°C by a heater 13, and then flows into the casing 11 of the system 10H. The raw water is supplied to the splitter device of the system 10H. A part of the raw water is evaporated. The remaining raw water is cooled down to 85°C, and supplied to the lower evaporation-condensation system 10G via the communication pipe 21. Subsequently, the remaining raw water is sequentially supplied to the evaporation-condensation systems 10F, 10E, 10D, 10C. The remaining raw water is cooled down to 60°C in the casing 11C.

A threshold of the evaporation of water is 60°C, and the evaporation of water sharply increases at 60°C or more. Thus, when raw water is introduced at 60°C or more into the evaporation-condensation systems 10C to 10H, water vapor from the raw water sharply increases and thus an amount of purified water to be collected by the condensers 10 also increases. This makes it possible to improve the efficiency for collecting purified water from raw water.

Generally, in order to heat raw water from 20°C up to 85 °C, it is necessary to employ 13 evaporation-condensation systems arranged in a tiered manner. In contract, the water purifying apparatus can heat raw water up to 85°C by using the 6 evaporation-condensation systems 10C to 10H arranged in a tiered manner, so that it becomes possible to downsize the apparatus.

In addition, the remaining raw water can be reused without discarding, so that it becomes possible to further improve the efficiency for collecting purified water from raw water, and reduce a load of the pump.

It is to be understood that the present invention is not limited to the above embodiments, but various changes and modifications will be apparent to those skilled in the art base on teaching of the above description.

[EXAMPLE 1]

Performance of the splitter device 15 according to the first embodiment was evaluated.

[Method of Measurement]

A casing having a diameter of 570 mm was used. As measurement conditions, an air supply amount was set to 8.1 m³/min (maximum value), and a flow rate of raw water was set to 6 L/min. An inlet temperature ($T_{air, in}$) of low-temperature air and an outlet temperature ($T_{air, out}$) of high-temperature air, an inlet temperature of heated raw water ($T_{w, in}$), and an outlet temperature of discharge water ($T_{w, out}$), were measured. As a comparative example, the sirocco fan 17b illustrated in FIG. 1 was used in place of the splitter device. The sirocco fan 17b was disposed horizontally (the sirocco fan 17b will hereinafter be referred to as "horizontal sirocco fan"), the same measurement was carried out.

[Method of Evaluation]

The evaluation was performed using a heat exchanger evaluation formula expressed as the following formula (1):

$$R_{th} = \Delta T_m / P_{exchange} \qquad\qquad --- (1)$$

where: $R_{th}$: thermal resistance coefficient;
$P_{exchange}$: amount of heat transferred from raw water to air (amount of lost heat of raw water) [kW], wherein $P_{exchange}$ is calculated using the following formula (2): $P_{exchange} = C_w \cdot m_w = (T_{w, in} - T_{w, out})$, where $C_w$: specific heat of water [kJ / (kg · K)], and m: flow rate of raw water;
$\Delta T_m$: logarithmic mean temperature difference between circulation air and raw water [K], wherein $\Delta T_m$ is calculated using the following formula (3): $\Delta T_m = (\Delta T_{in} - \Delta T_{out}) / \ln (\Delta T_{in} / \Delta T_{out})$, where $\Delta T_{in}$: inlet fluid temperature difference [K]

($\Delta T_{in} = T_{w, in} - T_{air, in}$), and $\Delta T_{out}$: outlet fluid temperature difference [K] ($\Delta T_{out} = T_{w, out} - T_{air, out}$)

[Measurement Result]

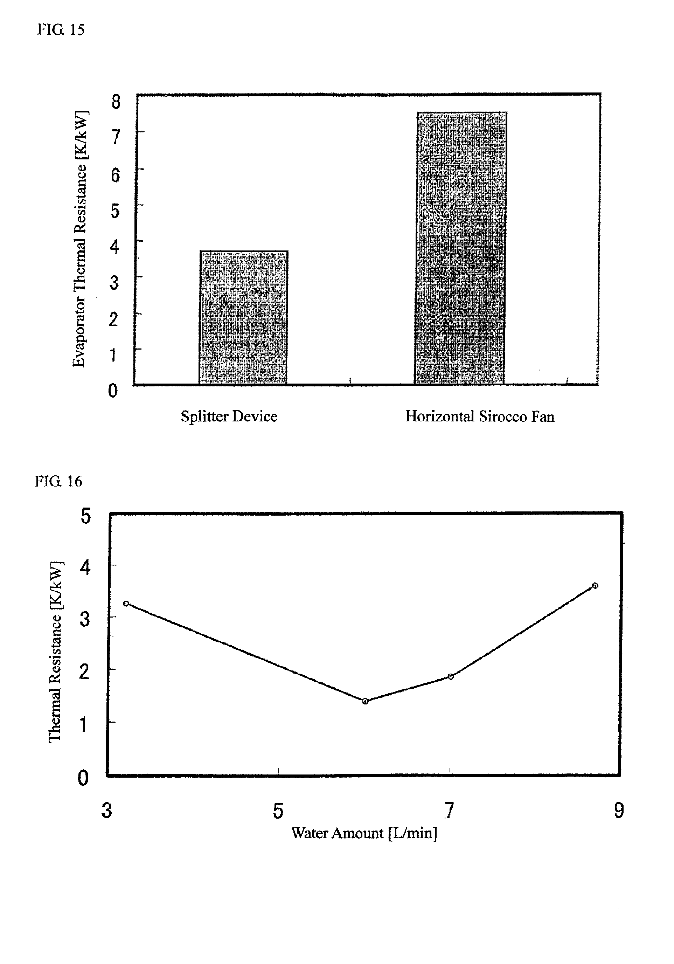

As illustrated in FIG. 15, the evaporator thermal resistance coefficient [K/kW] of the blade of the splitter device was about 3.8 K/kW, whereas the evaporator thermal resistance coefficient [K/kW] of the horizontal sirocco fan was about 7.6 K/kW. As for evaporator thermal resistance coefficient, the splitter device has a value less than that of the horizontal sirocco fan. This shows that, as for evaporation performance, the splitter device is superior to the horizontal sirocco fan.

[EXAMPLE 2]

In Example 2, the upper and lower disk blades 15c, 15d in the first embodiment were used to carry out performance evaluation thereof. As a comparative example, a single disc blade identical to each of the disk blades 15c, 15d was used. Further, a single disc blade having 24 blade segments (blades) without the peripheral-edge concave portion was used as a reference example 1, and upper and lower disc blades each having 24 blade segments (blades) without the peripheral-edge concave portion were used as a reference example 2.
As a method of performance evaluation, respective temperatures and humidities at inlet and outlet of the casing were measured while supplying hot air to mist (droplets) created by the disc blade(s). A flow rate of vapor was calculated from the measured temperatures and humidities, and a difference between the calculated inlet and outlet vapor amounts was defined as a evaporation amount [g/min].
As initial conditions, a room temperature, a relative humidity and an air supply amount were set to 26.4°C, 75.7% and 1.91 m$^3$/min, respectively. A result of the evaluation is illustrated in the following Table 1.
TABLE 1

|  | Number of blades | Evaporation amount [g/min] |
|---|---|---|
| Example 2 | 16 | 2.67 |
| Comparative example | 16 | 2.32 |
| Reference example 1 | 24 | 2.28 |
| Reference example 2 | 24 | 2.35 |

The evaporation amount in the comparative example was 2.32 [g/min], whereas the water vapor amount in Example 2 was increased to 2.67 [g/min]. In the reference examples 1 and 2, the reference example 1 having the upper and lower disk blades had a higher evaporation amount. The reason would be as follows. When raw water is dropped down from above the disk blade and split into droplets (mist), a part of raw water will fall through a gap between adjacent ones of the blade segments. Thus, the two disc blades arranged in series in an axial direction make it possible to reduce an amount of raw water failing to hit against the disk blade, which leads to an increase in evaporation amount.

[THIRD EMBODIMENT]

A relationship between a thermal resistance coefficient ($R_{th}$) and a raw water supply amount was evaluated for the disk plate 15f illustrated in FIGS. 6(A) and 6(B).
Referring to FIG. 16, when the water amount is 3 L/min, the thermal resistance coefficient is about 3 K/W. When the water amount is increased to 6 L/min, the thermal resistance coefficient has a minimum value of about 1 K/W. This shows high heat exchanging performance. However, as the water amount increases from 6 L/min, the thermal resistance coefficient also increases. When the water amount is 8.5 L/min, the thermal resistance coefficient is increased to 4 K/W. The reason would be as follows. In cases where the water amount is small, an absolute volume of mist becomes small, which precludes heat exchange. On the other hand, in cases where the water amount is excessively large, even if raw water hits against the disk blade, the raw water cannot be entirely transformed into mist, and an amount of water falling along the blade segments is increased. Thus, it is considered that there is an optimal value for the amount of raw water to be supplied to the disk blade.

INDUSTRIAL APPLICABILITY

The present invention is usable in a water supply project for obtaining purified water from raw water.

EXPLANATION OF CODES

1: water purifying apparatus
10: evaporation-condensation system
11: casing
12: pump
13: heater
14: pipe
15: splitter device
15a: rotary shaft
15c, 15d: disk blade
16: guide
17: circulator
18: demister
19: condenser

**Claims**

1.  A water purifying apparatus comprising:

    a casing having a circulation path;
    a splitter device disposed within the casing and adapted to split raw water into droplets and create a carrier airflow capable of circulating along the circulation path and carrying water vapor evaporated from the droplets; and
    a condenser disposed within the casing at a position downstream of the splitter device in a direction of the carrier airflow and adapted to condense the water vapor to create purified water,
    wherein the splitter device comprises a rotary shaft extending in an up-down direction of the casing, and a blade radially attached to the rotary shaft and having irregularities.

2.  The water purifying apparatus as defined in claim 1, wherein the irregularities comprise a concave portion depressed from a blade surface of the blade.

3.  The water purifying apparatus as defined in claim 2, wherein the concave portion is formed to extend from an edge of the blade.

4.  The water purifying apparatus as defined in claim 1, wherein the irregularities comprise a concave portion formed by partially cutting out an edge of the blade.

5.  The water purifying apparatus as defined in claim 1, wherein the irregularities comprise a protrusion protruding from a blade surface of the blade.

6.  The water purifying apparatus as defined in claim 1, wherein the irregularities comprise first and second concave portions arranged in series in a direction toward a distal end of the blade, and a convex portion arranged between the first and second concave portions.

7.  The water purifying apparatus as defined in claim 1, wherein the blade is disposed obliquely with respect to the rotary shaft.

8.  The water purifying apparatus as defined in claim 1, wherein the blade is formed by cutting a disk-shaped member in a radial direction thereof to prepare a sector-shaped piece, and twisting the sector-shaped piece.

9. The water purifying apparatus as defined in claim 1, which comprises a circulator attached to the rotary shaft of the splitter device.

10. The water purifying apparatus as defined in claim 1, wherein the casing includes a first casing and a second casing which are stacked up and down,
and wherein:

the splitter device includes a first splitter device disposed within the first casing and having a first blade, and a second splitter device disposed within the second casing and having a second blade, the first and second splitter devices comprising a rotary shaft to which the first and second blades are attached; and
the condenser includes a first condenser disposed within the first casing, and a second condenser disposed within the second casing.

11. The water purifying apparatus as defined in claim 1, wherein the casing includes a first casing, and a second casing communicating with the first casing,
and wherein:

the splitter device includes a first splitter device disposed within the first casing, and a second splitter device disposed within the second casing; and
the condenser includes a first condenser disposed within the first casing, and a second condenser disposed within the second casing and communicating with the first condenser,
and wherein the water purifying apparatus comprises a feedback pipe communicating between an outlet pipe of the first casing and the first condenser,
whereby raw water is heated by the first condenser and the second condenser and supplied to the second splitter device, whereafter a part of the raw water supplied to the second splitter device is evaporated and then condensed by the second condenser, and the remaining raw water is supplied to the first splitter device, whereafter a part of the raw water supplied to the first splitter device is evaporated and then condensed by the first condenser, and the remaining raw water is discharged at 60°C or more from the first casing and introduced into the first condenser via the feedback pipe.

12. A water purifying apparatus comprising:

a casing having a circulation path;
a splitter device disposed within the casing and adapted to split raw water into droplets and create a carrier airflow capable of circulating along the circulation path and carrying water vapor evaporated from the droplets;
a demister disposed within the casing at a position downstream of the splitter device in a direction of the carrier airflow and adapted to remove the droplets while permitting the water vapor to pass therethrough; and
a condenser disposed within the casing at a position downstream of the demister in the direction of the carrier airflow and adapted to condense the water vapor flowing out of the demister to create purified water,
wherein the demister comprises a plurality of demister plates arranged at intervals of a predetermined distance to define a flow passage therebetween.

13. The water purifying apparatus as defined in claim 12, wherein each of the demister plates is bent.

14. The water purifying apparatus as defined in claim 12, wherein each of the demister plates is curved.

15. The water purifying apparatus as defined in claim 12, wherein each of the demister plates has a wave shape.

16. A water purifying apparatus comprising:

a casing having a circulation path;
a splitter device disposed within the casing and adapted to split raw water into droplets and create a carrier airflow capable of circulating along the circulation path and carrying water vapor evaporated from the droplets; and
a condenser disposed within the casing at a position downstream of the splitter device in a direction of the carrier airflow and adapted to condense the water vapor to create purified water,
wherein the splitter device comprises a rotary shaft extending in an up-down direction of the casing, a blade radially attached to the rotary shaft, and a guide disposed upstream of the blade in the direction of the carrier airflow.

**17.** The water purifying apparatus as defined in claim 16, wherein the guide is composed of a curved guide plate.

**18.** The water purifying apparatus as defined in claim 16, wherein the guide is composed of a plurality of guide plates arranged in mutually spaced-apart relation.

**19.** The water purifying apparatus as defined in claim 18, wherein each of the guide plates is disposed obliquely with respect to a radial direction having a center at the rotary shaft.

**20.** The water purifying apparatus as defined in claim 19, wherein each of the guide plates is curved.

**21.** The water purifying apparatus as defined in claim 18, wherein the guide includes a plurality of first guide plates, and a second guide plate disposed outside the first guide plates and between adjacent ones of the first guide plates.

FIG. 1

FIG. 2

FIG. 3

FIG. 4

15c,15d

15a

152K   152I   152G   152E

152q   152p

152L   152J   152H   152F

R1

FIG. 5

(A)

152d

152b

152r

152a

152c

152s

(B)

152d

152t

152b

152a

152c

FIG. 6

(A)

154

154c

154a
154r
154q

154b

154p

15f

XIB

XIB

153        153a

(B)

15f

15a        154d

153a        153        154p        154

154c

154e
154q        154r

FIG. 7

FIG. 8

FIG. 9

180C

181e    181c    181a
181d    181b

181

EP 2 455 343 A1

FIG. 10

24

FIG. 11

FIG. 12

(A)

(B)

FIG. 13

FIG. 14

1D

13

14

85°C

90°C

10H

21

80°C ↑          ↓ 85°C

10G

75°C ↑          ↓ 80°C

10F

70°C ↑          ↓ 75°C

10E

65°C ↑          ↓ 70°C

10D

22

60°C ↑          ↓ 65°C

10C

12

55°C ↑          ↓ 60°C

P                         11e

20°C

26

28

FIG. 15

FIG. 16

## INTERNATIONAL SEARCH REPORT

| International application No. |
|---|
| PCT/JP2009/062664 |

A. CLASSIFICATION OF SUBJECT MATTER

C02F1/14(2006.01)i, B01D1/16(2006.01)i, B01D5/00(2006.01)i, C02F1/04
(2006.01)i

According to International Patent Classification (IPC) or to both national classification and IPC

B. FIELDS SEARCHED

Minimum documentation searched (classification system followed by classification symbols)
C02F1/14, B01D1/16, B01D5/00, C02F1/04

Documentation searched other than minimum documentation to the extent that such documents are included in the fields searched
Jitsuyo Shinan Koho          1922–1996   Jitsuyo Shinan Toroku Koho   1996–2009
Kokai Jitsuyo Shinan Koho    1971–2009   Toroku Jitsuyo Shinan Koho   1994–2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | JP 3250738 B2  (Masakatsu TAKAYASU),<br>28 January, 2002 (28.01.02),<br>Claim 1; column 11, line 20 to column 15,<br>line 48; Figs. 1, 4, 8<br>(Family: none) | 1,7-9,12-17<br>1-17<br>18-21 |
| Y | JP 62-247850 A  (Ohkawara Kakohki Co., Ltd.),<br>28 October, 1987 (28.10.87),<br>Page 3, upper left column, line 5 to upper right<br>column, line 13<br>(Family: none) | 1-17 |
| Y<br>A | JP 2005-185988 A  (Xenesys Inc.),<br>14 July, 2005 (14.07.05),<br>Par. Nos. [0021] to [0031]; Fig. 1<br>(Family: none) | 1-17<br>18-21 |

☒  Further documents are listed in the continuation of Box C.          ☐  See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>21 August, 2009 (21.08.09) | Date of mailing of the international search report<br>01 September, 2009 (01.09.09) |
|---|---|
| Name and mailing address of the ISA/<br>Japanese Patent Office | Authorized officer |
| Facsimile No. | Telephone No. |

Form PCT/ISA/210 (second sheet) (April 2007)

**EP 2 455 343 A1**

| INTERNATIONAL SEARCH REPORT | International application No. |
| | PCT/JP2009/062664 |

C (Continuation).   DOCUMENTS CONSIDERED TO BE RELEVANT

| Category* | Citation of document, with indication, where appropriate, of the relevant passages | Relevant to claim No. |
|---|---|---|
| Y | Microfilm of the specification and drawings annexed to the request of Japanese Utility Model Application No. 79703/1978(Laid-open No. 1039/1979) (Sasakura Engineering Co., Ltd.), 06 January, 1979 (06.01.79), Page 6, lines 14 to 17; drawings (Family: none) | 10,11 |

Form PCT/ISA/210 (continuation of second sheet) (April 2007)

31

## INTERNATIONAL SEARCH REPORT

| International application No. |
| --- |
| PCT/JP2009/062664 |

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:

because they relate to subject matter not required to be searched by this Authority, namely:

2. ☐ Claims Nos.:

because they relate to parts of the international application that do not comply with the prescribed requirements to such an extent that no meaningful international search can be carried out, specifically:

3. ☐ Claims Nos.:

because they are dependent claims and are not drafted in accordance with the second and third sentences of Rule 6.4(a).

**Box No. III    Observations where unity of invention is lacking (Continuation of item 3 of first sheet)**

This International Searching Authority found multiple inventions in this international application, as follows:

The technical feature common to the invention of claim 1 and the inventions of claims 12-15 is "a water purifying device comprising a case and a splitter device, the case having a circulation path, the splitter device being mounted in the case, splitting raw water into liquid drops, and forming a carrier air flow capable of circulating in the circulation path and also capable of carrying water vapor formed by evaporation from the liquid drops." However, the technical feature is disclosed in JP 3250738 B2. Sine the technical feature makes no contribution over the prior art, it is not a special technical feature. Also, there are no special technical features which are the same or corresponding to each other.

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**
the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**REFERENCES CITED IN THE DESCRIPTION**

**Patent documents cited in the description**

- JP 2006070889 A
- JP 9052082 A